# EUROPÄISCHE PATENTANMELDUNG

(11) **EP 4 567 942 A1**
(43) Veröffentlichungstag der Anmeldung: **11.06.2025**
(21) Anmeldenummer: 24213474.0
(22) Anmeldetag: 18.11.2024
(51) Int. Cl.: H01M 8/04119, H01M 8/0662

(54) **BRENNSTOFFZELLENABGASANLAGE**

(30) Priorität: 07.12.2023 DE 102023134234
(71) Anmelder: Purem GmbH, 66539 Neunkirchen (DE)
(72) Erfinder: Notter, Manuel, Schwaikheim (DE); Kurpejovic, Enver, Kirchheim unter Teck (DE)
(74) Vertreter: Ruttensperger Lachnit Trossin Gomoll

(57) **Zusammenfassung**

Eine Brennstoffzellenabgasanlage, insbesondere für ein Fahrzeug, umfasst eine Kondensatoreinheit (20) zur Aufnahme von von einer Brennstoffzelleneinheit abgegebenem, wasserhaltigem Brennstoffzellenabgas (B) und eine stromabwärts der Kondensatoreinheit (20) angeordnete Abscheideeinheit (22) zum Abscheiden von aus dem der Kondensatoreinheit (20) zugeführten, wasserhaltigen Brennstoffzellenabgas (B) auskondensiertem Wasser, wobei die Abscheideeinheit (22) einen durch eine Kanalwand (34) begrenzten, wenigstens bereichsweise bogenartig gekrümmten Abscheidekanal (30) umfasst, wobei der Abscheidekanal (30) wenigstens im Bereich einer Bogenaußenseite von einer Abscheidekammer (40) umgeben ist, wobei in der Kanalwand (34) eine Mehrzahl von den Abscheidekanal (30) mit der Abscheidekammer (40) verbindenden Abscheideöffnungen (42) vorgesehen ist.

## Beschreibung

Die vorliegende Erfindung betrifft eine Brennstoffzellenabgasanlage, die insbesondere in Verbindung mit einer in einem Fahrzeug zum Bereitstellen elektrischer Energie eingesetzten Brennstoffzelleneinheit verwendet werden kann.

Zur Erzeugung elektrischer Energie werden einer Brennstoffzelleneinheit wasserstoff-(H₂)-haltiges Anodengas und sauerstoffhaltiges Kathodengas, beispielsweise Luft, zugeführt. Das die Brennstoffzelle verlassende Brennstoffzellenabgas, insbesondere das Kathodenabgas, enthält einen vergleichsweise großen Anteil an in Form von Wasserdampf mitgeführtem Wasser. Bei Abgabe des wasserhaltigen Brennstoffzellenabgases in die Umgebung kann es abhängig von den Umgebungsbedingungen zur Nebelbildung und gegebenenfalls auch zur Eisbildung auf dem beispielsweise unter einem Fahrzeug sich befindenden Untergrund kommen.

Es ist die Aufgabe der vorliegenden Erfindung, eine Brennstoffzellenabgasanlage vorzusehen, mit welcher mit baulich einfachen Maßnahmen eine effiziente Abscheidung von im Brennstoffzellenabgas enthaltendem Wasser erreicht werden kann.

Erfindungsgemäß wird diese Aufgabe gelöst durch eine Brennstoffzellenabgasanlage, insbesondere für ein Fahrzeug, umfassend eine Kondensatoreinheit zur Aufnahme von von einer Brennstoffzelleneinheit abgegebenem, wasserhaltigem Brennstoffzellenabgas und eine stromabwärts der Kondensatoreinheit angeordnete Abscheideeinheit zum Abscheiden von aus dem der Kondensatoreinheit zugeführten, wasserhaltigen Brennstoffzellenabgas auskondensiertem Wasser, wobei die Abscheideeinheit einen durch eine Kanalwand begrenzten, wenigstens bereichsweise bogenartig gekrümmten Abscheidekanal umfasst, wobei der Abscheidekanal wenigstens im Bereich einer Bogenaußenseite von einer Abscheidekammer umgeben ist, wobei in der Kanalwand eine Mehrzahl von den Abscheidekanal mit der Abscheidekammer verbindenden Abscheideöffnungen vorgesehen ist.

Die erfindungsgemäß aufgebaute Brennstoffzellenabgasanlage nutzt die in dem bogenartig gekrümmten Abscheidekanal auftretenden Zentrifugalkräfte, durch welche das Brennstoffzellenabgas und das darin enthaltene, im Bereich der Kondensatoreinheit auskondensierte und in Tröpfchenform, also in flüssiger Form, mitgeführte Wasser nach radial außen beaufschlagt werden. Das auskondensierte Wasser wird sich in dem bogenartig gekrümmten Abscheidekanal an der Innenoberfläche des bogenäußeren Bereichs der Kanalwand niederschlagen bzw. ansammeln und über die dort vorgesehenen Abscheideöffnungen in die Abscheidekammer eintreten. Somit wird ein großer Teil des in dem aus einer Brennstoffzelleneinheit ausgestoßenen Brennstoffzellenabgas enthaltenen Wassers von den gasförmigen Bestandteilen, insbesondere Sauerstoff und Stickstoff, des Brennstoffzellenabgases getrennt und kann beispielsweise in den Brennstoffzellenprozess rückgespeist werden oder in flüssiger Form gesammelt und zur Umgebung abgegeben werden. Das Ausmaß der Nebelbildung an einem Auslassöffnungsbereich der Brennstoffzellenabgasanlage wird somit erheblich verringert.

Für eine effiziente Abscheidewirkung kann der Abscheidekanal ein Bogensegment mit einem Bogenwinkel von wenigstens 90°, vorzugsweise etwa 180°, umfassen.

Da das auskondensierte Wasser durch die Fliehkraft in Bezug auf die Bogenform des Abscheidekanals nach radial außen gedrängt wird, ist es besonders vorteilhaft, wenn eine Mehrzahl der Abscheideöffnungen, vorzugsweise alle Abscheideöffnungen, im Bereich einer bogenäußeren Hälfte der Kanalwand vorgesehen ist bzw. sind. Eine Schwächung der strukturellen Festigkeit durch im radial inneren Bereich der Kanalwand vorgesehene, zum Abscheiden nicht wirksame Öffnungen kann dadurch vermieden werden.

Zum Abgeben des abgeschiedenen Wassers kann vorzugsweise in einem stromabwärtigen Endbereich der Abscheidekammer wenigstens eine Ablassöffnung vorgesehen sein.

Dabei kann zum Erhalt einer kompakten Bauform ein bezüglich einer Brennstoffzellenabgas-Hauptströmungsrichtung stromabwärtiger Endbereich der Abscheidekammer im Bereich eines bogenartig gekrümmten Abschnitts des Abscheidekanals angeordnet sein.

Bei einer alternativen Ausgestaltungsform, bei welcher eine größere Länge des Abscheidekanals genutzt werden kann, kann vorgesehen sein, dass an ein stromabwärtiges Ende eines bogenartig gekrümmten Abschnitts des Abscheidekanals ein im Wesentlichen geradlinig sich erstreckender Abschnitt des Abscheidekanals anschließt, und dass ein bezüglich einer Brennstoffzellenabgas-Hauptströmungsrichtung stromabwärtiger Endbereich der Abscheidekammer im Bereich des im Wesentlichen geradlinig sich erstreckenden Abschnitts des Abscheidekanals angeordnet ist.

Um das Abscheiden von Wasser aus dem Brennstoffzellenabgas weiter zu unterstützen, wird vorgeschlagen, dass wenigstens an einem bogenäußeren Bereich der Kanalwand wenigstens eine in den Abscheidekanal sich erstreckende Abscheideblende vorgesehen ist. An einer derartigen bezüglich der bogenförmig gekrümmten Gestalt des Abscheidekanals nach radial innen hervorstehenden Abscheideblende kann im Brennstoffzellenabgas mitgeführtes, in Tröpfchenform vorliegendes Wasser sich niederschlagen und dann unter der Fliehkraftwirkung oder/und Schwerkraftwirkung nach radial außen in den Bereich der Kanalwand und der darin vorgesehenen Abscheideöffnungen abgeleitet werden.

Für eine effiziente Abscheidewirkung wird vorgeschlagen, dass wenigstens eine Abscheideblende stromabwärts der wenigstens einen Ablassöffnung angeordnet ist.

Zum weiteren Unterstützen des Ableitens von auskondensiertem und in Richtung auf die Kanalwand zu beaufschlagtem Wasser kann wenigstens eine Abscheideöffnung als in einer Umfangsrichtung um eine Kanalmittenachse des Abscheidekanals sich erstreckendes Langloch ausgebildet sein.

Auch dabei ist es für ein effizientes Abscheiden vorteilhaft, wenn wenigstens eine als Langloch ausgebildete Abscheideöffnung stromabwärts der wenigstens einen Ablassöffnung angeordnet ist.

Eine besonders effiziente Zusammenwirkung von Abscheideblende einerseits und langlochartig ausgebildeter Abscheideöffnung andererseits kann erreicht werden, wenn wenigstens eine Abscheideblende stromabwärts wenigstens einer als Langloch ausgebildeten Abscheideöffnung angeordnet ist.

Die Erfindung betrifft ferner ein Brennstoffzellensystem, vorzugsweise in einem Fahrzeug, umfassend wenigstens eine Brennstoffzelleneinheit und eine Brennstoffzellenabgas aus der wenigstens einen Brennstoffzelleneinheit aufnehmende erfindungsgemäß aufgebaute Brennstoffzellenabgasanlage.

Um das Abgeben von aus dem Brennstoffzellenabgas abgeschiedenem Wasser zu unterstützen, ist es vorteilhaft, wenn der Abscheidekanal in einer Höhenrichtung, also einer Vertikalrichtung, derart abwärts gekrümmt ist, dass ein stromaufwärtiger Endbereich des Abscheidekanals in der Höhenrichtung höher positioniert ist, als ein stromabwärtiger Endbereich des Abscheidekanals.

Die vorliegende Erfindung wird nachfolgend mit Bezug auf die beiliegenden Figuren detailliert beschrieben. Es zeigt:
- Fig. 1: eine Seitenansicht einer Brennstoffzellenabgasanlage;
- Fig. 2: die Brennstoffzellenabgasanlage der Fig. 1 teilweise im Längsschnitt;
- Fig. 3: eine Abscheideeinheit der Brennstoffzellenabgasanlage der Fig. 1;
- Fig. 4: die Abscheideeinheit der Fig. 3 in perspektivischer Ansicht;
- Fig. 5: einen Bereich einer Kanalwand der Abscheideeinheit der Fig. 3;
- Fig. 6: eine Seitenansicht einer alternativen Ausgestaltungsart der Abscheideeinheit;
- Fig. 7: eine der Fig. 2 entsprechende Ansicht einer alternativen Ausgestaltungsart der Abscheideeinheit;
- Fig. 8: in prinzipartiger Darstellung eine Schnittansicht der Abscheideeinheit der Fig. 7, geschnitten längs einer Linie VIII-VIII in Fig. 7;
- Fig. 9: eine Seitenansicht einer alternativen Ausgestaltungsart der Abscheideeinheit;
- Fig. 10: eine prinzipartige Darstellung eines Brennstoffzellensystems.

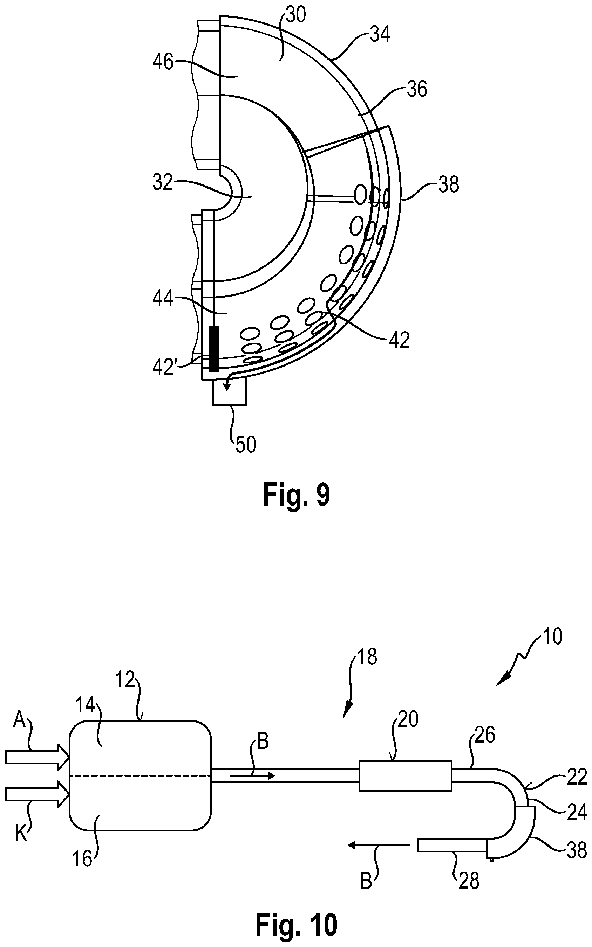

In Fig. 10 ist ein Brennstoffzellensystem, welches beispielsweise in einem Fahrzeug eingesetzt werden kann, um elektrische Energie für den Fahrantrieb bereitzustellen, allgemein mit 10 bezeichnet. Das Brennstoffzellensystem 10 umfasst eine beispielsweise als Brennstoffzellenstapel ausgebildete Brennstoffzelleneinheit 12 mit einem Anodenbereich 14 und einem Kathodenbereich 16. Dem Anodenbereich 14 wird Wasserstoff bzw. wasserstoffhaltiges Gas als Anodengas A zugeführt. Dem Kathodenbereich 16 wird Sauerstoff bzw. sauerstoffhaltiges Gas, beispielsweise Luft, als Kathodengas K zugeführt. Im Anodenbereich 14 entsteht ein wasserstoffentreichertes Anodenabgas, während im Kathodenbereich 16 ein mit Wasser bzw. Wasserdampf angereichertes Kathodenabgas entsteht. Diese beiden Gasströme können beispielsweise zusammengeführt und als Brennstoffzellenabgas B in eine Brennstoffzellenabgasanlage 18 eingeleitet werden. Über die Brennstoffzellenabgasanlage 18 wird das Brennstoffzellenabgas B zur Umgebung abgegeben.

Um beim Austritt von Brennstoffzellenabgas B aus der Brennstoffzellenabgasanlage 18 zur Umgebung insbesondere bei niedrigen Umgebungstemperaturen eine Nebelbildung zu vermeiden, sind in der Brennstoffzellenabgasanlage 18 Maßnahmen vorgesehen, um dem Brennstoffzellenabgas B das zur Nebelbildung führende Wasser zu entziehen.

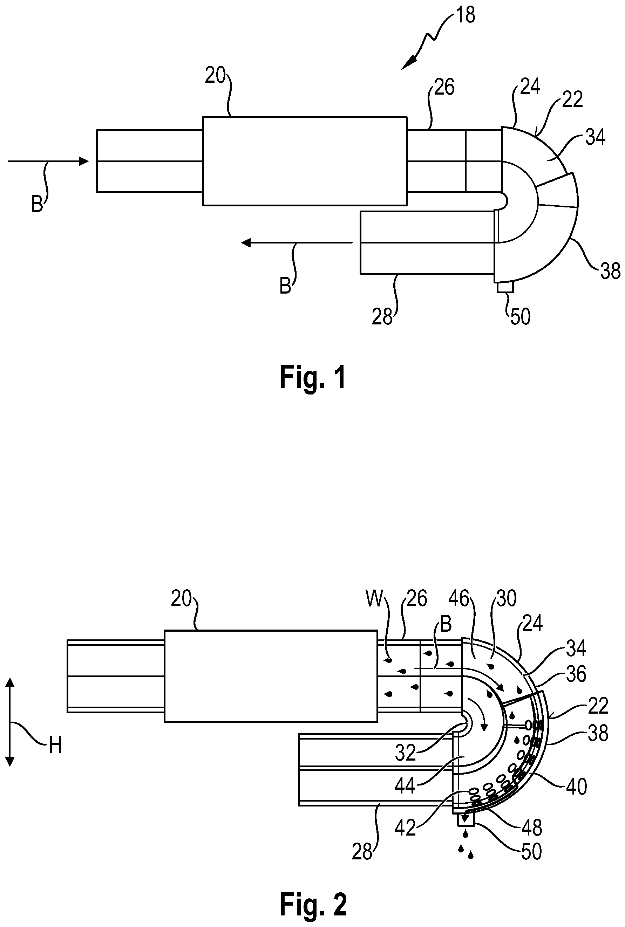

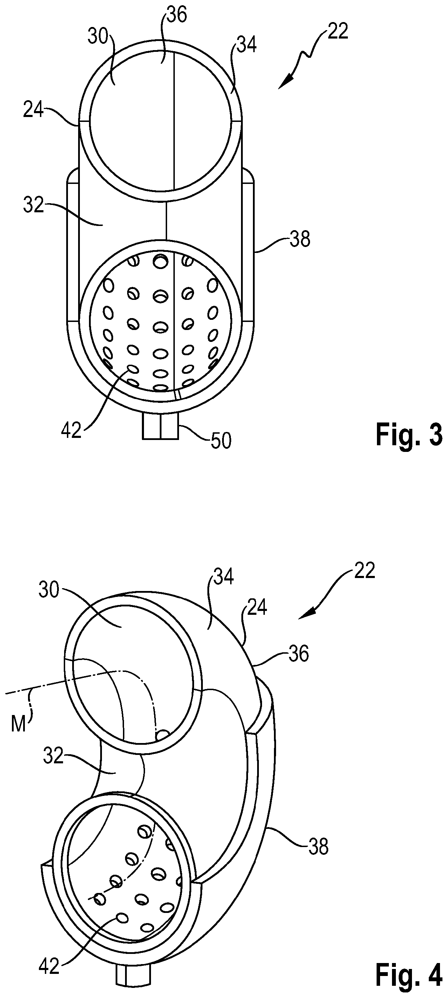

Die Brennstoffzellenabgasanlage 18 umfasst eine oder mehrere von den Brennstoffzellenabgas B durchströmbare Kondensatoreinheiten 20. In der Kondensatoreinheit 20 wird beispielsweise durch thermische Wechselwirkung des Brennstoffzellenabgases B mit der vergleichsweise kalten Umgebungsluft ein Kondensationsprozess ausgelöst, was dazu führt, dass ein wesentlicher Teil des in dem Brennstoffzellenabgas B als Dampf, also als Gas, enthaltenen Wassers auskondensiert und in dem die Kondensatoreinheit 20 verlassenden Brennstoffzellenabgas B in Tröpfchenform mitgeführt wird. In einer stromabwärts auf die Kondensatoreinheit 20 folgenden und nachfolgend mit Bezug auf die Fig. 1 bis 9 detailliert beschriebenen Abscheidereinheit 22 wird das bzw. ein Großteil des auskondensierten Wassers von den verbleibenden gasförmigen Bestandteilen des Brennstoffzellenabgases B, also im Wesentlichen Sauerstoff und Stickstoff, getrennt, gesammelt und beispielsweise in den Brennstoffzellenprozess zurückgespeist oder in flüssiger Form zur Umgebung abgegeben.

Die in den Fig. 1 bis 5 in einer ersten Ausgestaltungsform dargestellte Abscheideeinheit 22 umfasst einen bogenförmigen Rohrabschnitt 24, der beispielsweise an einen von der Kondensatoreinheit 20 wegführenden, im Wesentlichen geradlinig sich erstreckender Abschnitt 26 anschließt. Der bogenförmige Rohrabschnitt 24 bildet beispielsweise ein Bogensegment mit einem Bogenwinkel von etwa 180°, was bedeutet, dass das den bogenförmigen Rohrabschnitt 24 durchströmende Brennstoffzellenabgas B eine Strömungsumlenkung um etwa 180° erfährt. Auf den bogenförmigen Rohrabschnitt 24 kann beispielsweise wiederum eine im Wesentlichen geradlinig sich erstreckender Rohrabschnitt 28 folgen, in welchem das Brennstoffzellenabgas B im Wesentlichen entgegengesetzt zur Strömungsrichtung in dem Rohrabschnitt 26 bzw. auch stromaufwärts der Kondensatoreinheit 20 strömt.

In dem bogenförmigen Rohrabschnitt 24 ist ein von dem Brennstoffzellenabgas B in einer Brennstoffzellenabgas-Hauptströmungsrichtung näherungsweise in Richtung einer Kanalmittenachse M durchströmter Abscheidekanal 30 gebildet, in welchem aufgrund der Umlenkung des Brennstoffzellenabgases B und der dabei auftretenden Fliehkräfte sowohl die gasförmigen Bestandteile des Brennstoffzellenabgases B, als auch die darin enthaltenen Wassertröpfchen W nach radial außen beaufschlagt werden. Dies hat zur Folge, dass einerseits im bogeninneren Bereich 32 des bogenförmigen Rohrabschnitts 24 bzw. einer den Abscheidekanal 30 umgrenzenden Kanalwand 34 eine Strömungsablösung nach radial außen auftritt, was die Beaufschlagung der im Brennstoffzellenabgas B mitgeführten Wassertröpfchen W nach radial außen unterstützt. Diese werden sich daher verstärkt an einem bogenäußeren Bereich 36 der Kanalwand 34 ansammeln und sich auch in der Strömungsrichtung des Brennstoffzellenabgases B entlang des bogenäußeren Bereichs 36 der Kanalwand 34 bewegen.

Die Kanalwand 34 des bogenförmigen Rohrabschnitts 24 ist bereichsweise von einer Abscheidekammerwand 38 umgeben. Dies betrifft insbesondere den bogenäußeren Bereich bzw. die bogenäußere Hälfte der Kanalwand 34 und näherungsweise die stromabwärtige Hälfte des bogenförmigen Rohrabschnitts 24. In dem von der Abscheidekammerwand 38 überdeckten Bereich begrenzt die Kanalwand 34 zusammen mit der Abscheidekammerwand 38 eine allgemein mit 40 bezeichnete Abscheidekammer. In dem Bereich, in welchem der Abscheidekanal 30 in seinem bogenäußeren bzw. stromabwärtigen Bereich von der Abscheidekammer 40 überdeckt ist, ist in der Kanalwand 34 eine Mehrzahl von Abscheideöffnungen 42 vorgesehen. Die Abscheideöffnungen 42 sind im Wesentlichen im Bereich der bogenäußeren Hälfte der Kanalwand 34 positioniert, also demjenigen Bereich, im welchem aufgrund der Fliehkrafteinwirkung und aufgrund der Strömungsrichtung des Brennstoffzellenabgases B im Abscheidekanal 30 die nach radial außen beaufschlagten Wassertröpfchen W sich ansammeln.

Durch die Abscheideöffnungen 42 gelangen die an der Innenseite der Kanalwand 34 sich ansammelnden Wassertröpfchen W bzw. das in der Kondensatoreinheit 20 aus dem Brennstoffzellenabgas B abgeschiedene Wasser in die Abscheidekammer 40. Da der bogenförmige Rohrabschnitt 24 derart positioniert ist, dass er, ausgehend von dem im Wesentlichen geradlinig sich erstreckenden Kanalabschnitt 26, nach radial unten führt, so dass der stromabwärtige Endbereich 44 des Abscheidekanals 30 in einer Höhenrichtung H bzw. in Vertikalrichtung im Wesentlichen unter einem stromaufwärtigen Endbereich 46 des Abscheidekanals 30 liegt, was zur Folge hat, dass auch der stromabwärtige Endbereich 48 der Abscheidekammer 40 in einer Höhenrichtung unten positioniert ist, fließt das durch die Abscheideöffnungen 42 in die Abscheidekammer 40 gelangte Wasser unter Schwerkrafteinwirkung nach unten in den Bereich einer Ablassöffnung 50.

Die am stromabwärtigen Endbereich 48 oder/und an einem in der Höhenrichtung H am tiefsten liegenden Bereich der Abscheidekammer 40 vorgesehene Ablassöffnung 50 kann grundsätzlich offen sein, so dass das in deren Bereich gelangende flüssige Wasser ohne der Gefahr einer Nebelbildung aus der Abscheidekammer 40 austreten und auf einen unter der Brennstoffzellenabgasanlage 18 sich befindenden Untergrund tropfen kann. Alternativ könnte die Ablassöffnung 50 durch eine Ventileinheit abgesperrt sein, so dass zu definierten Zeitpunkten Wasser aus der Abscheidekammer 40 abgelassen werden kann und beispielsweise auch über entsprechende Leitungen zur Brennstoffzelleneinheit 12 zurückgespeist werden kann.

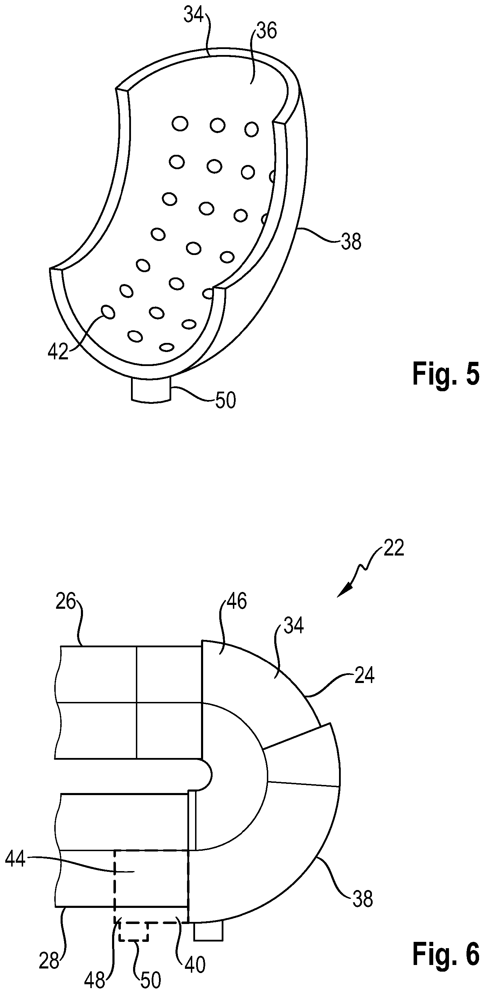

Bei einer in Fig. 6 dargestellten abgewandelten Ausgestaltungsart erstreckt der Abscheidekanal 30 sich, wie durch Strichlinie angedeutet, über das durch den bogenförmigen Rohrabschnitt 24 bereitgestellte Bogensegment von 180° hinaus beispielsweise in den Bereich des geradlinig sich erstreckenden Rohrabschnitts 28 oder in einen entsprechend verlängerten Abschnitt des bogenförmigen Rohrabschnitts 24. Auch die Abscheidekammer 40 erstreckt sich über das Bogensegment des bogenförmigen Rohrabschnitts 24 hinaus in diesen geradlinig sich erstreckenden Bereich, so dass sowohl für den Abscheidekanal 30, als auch für die Abscheidekammer 40 ein größeres Volumen bzw. auch ein längerer Strömungsweg bereitgestellt werden kann, um dadurch ein weiter verbessertes Abscheideverhalten erreichen zu können. Auch der Bereich, in welchem die Abscheideöffnungen 42 vorgesehen sind, kann sich bis in diesen den stromabwärtigen Endbereich 44 des Abscheidekanals 30 bzw. des Rohrabschnitts 24 bereitstellenden, geradlinig sich erstreckenden Bereich des Abscheidekanals 30 bzw. der diesen umgrenzenden Kanalwand 34 erstrecken.

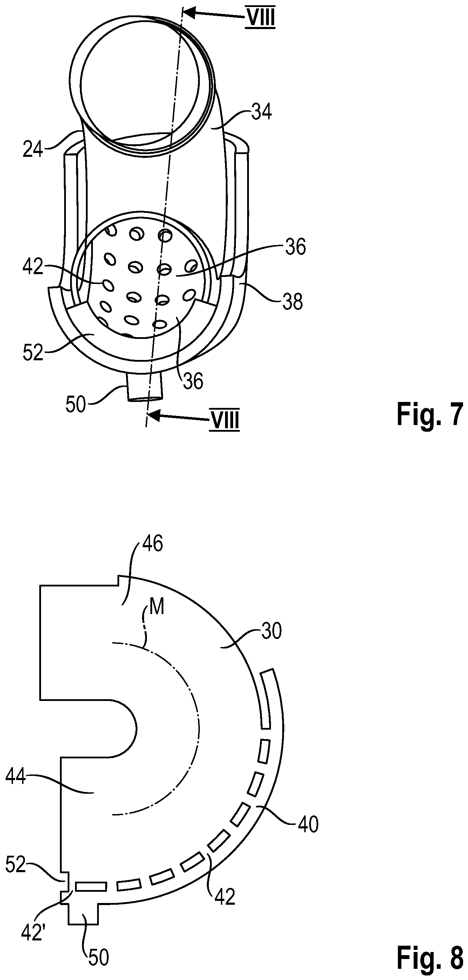

Die Fig. 7 bis 9 zeigen eine weitere Ausgestaltungsart der Abscheideeinheit 22, bei welcher durch spezielle bauliche Maßnahmen das Abscheiden von Wasser bzw. Wassertröpfchen aus dem Brennstoffzellenabgas B unterstützt wird.

Die Fig. 7 und 8 zeigen, dass stromabwärts der Ablassöffnung 50 eine in den Abscheidekanal 30 sich hinein erstreckende Abscheideblende 52 vorgesehen ist. Die Abscheideblende 52 erstreckt sich vom bogenäußeren Bereich 36 der Kanalwand 34 bezüglich der Kanalmittenachse M nach radial innen und bildet somit ein Strömungshindernis für im bogenäußeren Bereich des Abscheidekanals 30 mit dem Brennstoffzellenabgas B noch mitgeführte Wassertröpfchen W. Diese treffen auf die Abscheideblende 52 auf. Da die Abscheideblende 52 am stromabwärtigen Endbereich 44 des Abscheidekanals 40 positioniert ist, wird das an der Abscheideblende 52 sich ansammelnde Wasser sich schwerkraftbedingt nach radial außen bzw. nach unten bewegen. Unmittelbar stromaufwärts der Abscheideblende 54 ist eine in Umfangsrichtung um die Kanalmittenachse M sich als Langloch erstreckende Abscheideöffnung 42 positioniert. Vorzugsweise ist die Erstreckungslänge der als Langloch ausgebildeten Abscheideöffnung 42' näherungsweise genauso lang, wie die Erstreckungslänge der Abscheideblende 52 um die Kanalmittenachse M. Somit kann das an der Abscheideblende 52 sich ansammelnde Wasser ungehindert in der Höhenrichtung nach unten durch die als Langloch ausgebildete Abscheideöffnung 42' in die Abscheidekammer 40 und zur Ablassöffnung 50 strömen.

Bei der erfindungsgemäß aufgebauten Brennstoffzellenabgasanlage ist durch die bereichsweise doppelwandige Ausgestaltung eine den von Brennstoffzellenabgas durchströmten Abscheidekanal in einem bogenäußeren Bereich überdeckende bzw. umgebende Abscheidekammer gebildet, in welcher aufgrund der Beaufschlagung der Wassertröpfchen nach außen, also in Richtung zum bogenäußeren Bereich der den Abscheidekanal umgrenzenden Kanalwand, das in einer Kondensatoreinheit auskondensierte, von den gasförmigen Bestandteilen des Brennstoffzellenabgas getrennte Wasser gesammelt wird. Weitere für die Separation des Wassers erforderliche und möglicherweise zu Strömungsverdämmungen führende Maßnahmen sind daher nicht erforderlich. In der erfindungsgemäß aufgebauten Brennstoffzellenabgasanlage werden allein die bei der Durchströmung der Abscheideeinheit auf das auskondensierte Wasser einwirkenden Kräfte, also einerseits die Fliehkraft und andererseits die Schwerkraft, genutzt, um auskondensiertes Wasser effizient von den gasförmigen Bestandteilen des Brennstoffzellenabgases zu trennen.

## Patentansprüche

1. Brennstoffzellenabgasanlage, insbesondere für ein Fahrzeug, umfassend eine Kondensatoreinheit (20) zur Aufnahme von von einer Brennstoffzelleneinheit abgegebenem, wasserhaltigem Brennstoffzellenabgas (B) und eine stromabwärts der Kondensatoreinheit (20) angeordnete Abscheideeinheit (22) zum Abscheiden von aus dem der Kondensatoreinheit (20) zugeführten, wasserhaltigen Brennstoffzellenabgas (B) auskondensiertem Wasser, wobei die Abscheideeinheit (22) einen durch eine Kanalwand (34) begrenzten, wenigstens bereichsweise bogenartig gekrümmten Abscheidekanal (30) umfasst, wobei der Abscheidekanal (30) wenigstens im Bereich einer Bogenaußenseite von einer Abscheidekammer (40) umgeben ist, wobei in der Kanalwand (34) eine Mehrzahl von den Abscheidekanal (30) mit der Abscheidekammer (40) verbindenden Abscheideöffnungen (42) vorgesehen ist.

2. Brennstoffzellenabgasanlage nach Anspruch 1,
**dadurch gekennzeichnet, dass** der Abscheidekanal (30) ein Bogensegment mit einem Bogenwinkel von wenigstens 90°, vorzugsweise etwa 180°, umfasst.

3. Brennstoffzellenabgasanlage nach Anspruch 1 oder 2,
**dadurch gekennzeichnet, dass** eine Mehrzahl der Abscheideöffnungen (42), vorzugsweise alle Abscheideöffnungen (42), im Bereich einer bogenäußeren Hälfte der Kanalwand (34) vorgesehen sind.

4. Brennstoffzellenabgasanlage nach einem der Ansprüche 1-3,
**dadurch gekennzeichnet, dass** vorzugsweise in einem stromabwärtigen Endbereich (48) der Abscheidekammer (40) wenigstens eine Ablassöffnung (50) vorgesehen ist.

5. Brennstoffzellenabgasanlage nach Anspruch 4,
**dadurch gekennzeichnet, dass** ein bezüglich einer Brennstoffzellenabgas-Hauptströmungsrichtung stromabwärtiger Endbereich (48) der Abscheidekammer (40) im Bereich eines bogenartig gekrümmten Abschnitts des Abscheidekanals (30) angeordnet ist.

6. Brennstoffzellenabgasanlage nach Anspruch 4,
**dadurch gekennzeichnet, dass** an ein stromabwärtiges Ende eines bogenartig gekrümmten Abschnitts des Abscheidekanals (30) ein im Wesentlichen geradlinig sich erstreckender Abschnitt des Abscheidekanals (30) anschließt, und dass ein bezüglich einer Brennstoffzellenabgas-Hauptströmungsrichtung stromabwärtiger Endbereich (48) der Abscheidekammer (40) im Bereich des im Wesentlichen geradlinig sich erstreckenden Abschnitts des Abscheidekanals (30) angeordnet ist.

7. Brennstoffzellenabgasanlage nach einem der Ansprüche 1-6,
**dadurch gekennzeichnet, dass** wenigstens an einem bogenäußeren Bereich (36) der Kanalwand (34) wenigstens eine in den Abscheidekanal (30) sich erstreckende Abscheideblende (52) vorgesehen ist.

8. Brennstoffzellenabgasanlage nach Anspruch 7 und Anspruch 4,
**dadurch gekennzeichnet, dass** wenigstens eine Abscheideblende (52) stromabwärts der wenigstens einen Ablassöffnung (50) angeordnet ist.

9. Brennstoffzellenabgasanlage nach einem der Ansprüche 1-8,
**dadurch gekennzeichnet, dass** wenigstens eine Abscheideöffnung (42`) als in einer Umfangsrichtung um eine Kanalmittenachse (M) des Abscheidekanals (30) sich erstreckendes Langloch ausgebildet ist.

10. Brennstoffzellenabgasanlage nach Anspruch 9,
**dadurch gekennzeichnet, dass** wenigstens eine als Langloch ausgebildete Abscheideöffnung (42`) stromabwärts der wenigstens einen Ablassöffnung (50) angeordnet ist.

11. Brennstoffzellenabgasanlage nach Anspruch 7 und Anspruch 10,
**dadurch gekennzeichnet, dass** wenigstens eine Abscheideblende (52) stromabwärts wenigstens einer als Langloch ausgebildeten Abscheideöffnung (42`) angeordnet ist.

12. Brennstoffzellensystem, vorzugsweise in einem Fahrzeug, umfassend wenigstens eine Brennstoffzelleneinheit (12) und eine Brennstoffzellenabgas (B) aus der wenigstens einen Brennstoffzelleneinheit (12) aufnehmende Brennstoffzellenabgasanlage (18) nach einem der Ansprüche 1-11.

13. Brennstoffzellensystem nach Anspruch 12,
**dadurch gekennzeichnet, dass** der Abscheidekanal (30) in einer Höhenrichtung (H) derart abwärts gekrümmt ist, dass ein stromaufwärtiger Endbereich (46) des Abscheidekanals (30) in der Höhenrichtung (H) höher positioniert ist, als ein stromabwärtiger Endbereich (44) des Abscheidekanals (30).
